# EUROPÄISCHE PATENTSCHRIFT

(11) **EP 0 721 070 B1**
(45) Veröffentlichungstag und Bekanntmachung des Hinweises auf die Patenterteilung: **25.02.1998**
(21) Anmeldenummer: 95120631.7
(22) Anmeldetag: 28.12.1995
(51) Int. Cl.: F16F 1/12

(54) **Federanordnung mit mindestens einer Zugfeder**
Spring arrangement with at least one tension spring
Arrangement de ressorts avec au moins un ressort à tension

(30) Priorität: 04.01.1995 DE 19500074
(43) Veröffentlichungstag der Anmeldung: 10.07.1996
(73) Patentinhaber: Märkisches Federn-Werk Beteiligungs-GmbH, 59609 Anröchte (DE)
(72) Erfinder: Schroer, Bernt, Dr., D-33442 Herzebrock-Clarholz (DE); De Schepper, Albertus J.A., D-59597 Erwitte (DE); Dunker, Friedrich-Wilhelm, D-58762 Altena (DE)
(74) Vertreter: Hüppe, Paul Wilhelm, Dipl.-Phys.

(56) Entgegenhaltungen:
- DE-A- 1 447 360
- DE-B- 1 247 760
- DE-U- 1 661 072
- FR-A- 1 398 102
- FR-A- 2 093 712
- FR-A- 2 502 263
- GB-A- 1 582 444
- US-A- 4 756 070
- US-A- 5 219 030
- PATENT ABSTRACTS OF JAPAN vol. 14, no. 103 (M-941) [4046] , 26.Februar 1990 & JP-A-01 307530 (NHK SPRING CO LTD), 12.Dezember 1989,

## Beschreibung

Die Erfindung bezieht sich auf eine Federanordnung mit mindestens einer Zugfeder nach dem Oberbegriff des Patentanspruchs 1.

Eine solche Federanordnung ist aus der US-A-5 219 030 bekannt. Die dortige Zugfeder weist an einem Federende einen Bereich mit anwachsendem Federdurchmesser und an dem gegenüberliegenden Federende eine angeformte Öse auf. Die Innenoberfläche des Befestigungselements zur Anlage des Bereichs mit anwachsendem Federdurchmesser ist ringförmig geschlossen ausgebildet. Zum Auswechseln der Zugfeder ist die Öse an dem einen Federende zu lösen und die alte Zugfeder dann in Richtung ihrer Federachse aus dem Befestigungselement herauszuziehen. Der Einbau der neuen Zugfeder erfolgt in umgekehrter Reihenfolge.

Zugfedern werden in verschiedenen technischen Bereichen eingesetzt, um Kräfte aufzunehmen. Problematisch ist dabei, daß die Kräfte schlagartig freigesetzt werden, wenn die Zugfeder bricht. Hierdurch können gefährliche, zum Teil lebensgefährliche Situationen hervorgerufen werden.

Die am stärksten bruchgefährdeten Bereiche einer schraubenförmigen Zugfeder liegen an den Federenden, dort wo Einrichtungen zur Befestigung der Zugfeder vorgesehen sind. Dies gilt vor allem für die bekannten Zugfedern, bei denen Ösen an den Federenden angeformt sind. Diese Ösen bestehen aus den Endabschnitten des Federdrahts, aus dem die Zugfeder gefertigt ist. Bei Belastung der Zugfedern treten Spannungsspitzen an den Ösenwurzeln und/oder Ösenrücken auf. Gleichzeitig finden sich hier Verformungen des Federdrahts mit Kerbwirkung, die von der Ausformung der Ösen herrühren. Zusammen ergibt sich eine lokal stark gesteigerte Bruchgefahr. Im Ergebnis brechen Zugfedern mit angeformten Ösen fast ausschließlich an den Ösenwurzeln oder Ösenrücken. Bei einem solchen Bruch tritt eine zusätzliche Gefährdung durch die schlagartig entspannte Zugfeder auf, die seitlich ausschlagen kann.

Zur Überwindung dieser Schwierigkeiten ist es bekannt, Zugfedern ohne angeformte Ösen zu verwenden, wobei eine Befestigung der Federenden durch sog. Einschraubstücke erfolgt. Die Einschraubstücke weisen ein auf die Federwindungen abgestimmtes Außengewinde auf und werden endseitig in das zylinderförmige Innere der Zugfeder eingeschraubt. Hiermit ist jedoch ein erheblicher Fertigungsaufwand verbunden. Dieser bezieht sich zum einen auf die Herstellung der Einschraubstücke und zum anderen auf das Einschrauben der Einschraubstücke in die Federenden. Das Einschrauben ist besonders beschwerlich, wenn die Federwindungen der unbelasteten Zugfeder mit einer größeren Vorspannkraft aufeinanderliegen. Der Mehraufwand für Zugfedern mit Einschraubstücken wird in keiner Weise dadurch kompensiert, daß die Feder selbst auf einfacheren Maschinen hergestellt werden kann, die keine Ösebiegevorrichtung aufweisen.

Als weitere Alternative zu Zugfedern mit angeformten Ösen ist es bekannt, die Federenden auf sog. Knochen aufzuschieben, die als Widerhaken dienende, radiale Vorsprünge aufweisen. Diese Art der Befestigung ist nur für Zugfedern mit vergleichsweise geringer Federkonstante realisierbar, da sich anderenfalls kein Knochen zerstörungsfrei in das Federinnere an den Federenden einbringen läßt. Ebensowenig ist die Befestigung von Zugfedern mit Knochen für die Aufnahme größerer Kräfte geeignet, da als Kraftübertragungsflächen nur die Widerhaken des Knochens zur Verfügung stehen.

Aus der DE-OS 39 24 974 ist eine Federanordnung mit mehreren parallel zueinander angeordneten Zugfedern bekannt. Die Zugfedern sind endseitig an gemeinsamen Befestigungselementen gelagert. Dabei ist jeder Zugfeder an jedem Befestigungselement ein knochenförmiger Fortsatz zugeordnet, auf den die Zugfeder aufgeschoben ist. Die Zugfeder weist dabei oberhalb der Widerhaken der Vorsprünge einen reduzierten Durchmesser auf. Die Parallelanordnung mehrerer Zugfedern bei einer Federanordnung, ein sogenanntes Federpaket hat den Vorteil, daß der Bruch einer einzelnen Zugfeder nicht die gesamte Federanordnung außer Gefecht, bzw. die gesamten Kräfte freisetzt. Bei der bekannten Federanordnung ist es jedoch nicht ohne weiteres möglich, einzelne Zugfedern beispielsweise nach deren Bruch oder Ermüdung auszutauschen.

Der Erfindung liegt die Aufgabe zugrunde, eine Federanordnung nach dem Oberbegriff des Patentanspruchs 1 aufzuzeigen, bei der die Bruchgefahr der Zugfeder gering ist und bei der die einfache Austauschbarkeit einzelner Zugfedern insbesondere bei der Ausbildung von Federpaketen gegeben ist.

Erfindungsgemäß wird dies durch die Merkmale des Patentanspruch 1 erreicht. Vorteilhafte Weiterbildungen der neuen Federanordnung beschreiben die Unteransprüche 2 bis 10.

Das Befestigungselement der neuen Federanordnung erlaubt ohne weiteres das Austauschen der Zugfeder, auch wenn an beiden Enden ein Bereich mit anwachsendem Federdurchmesser vorgesehen ist, weil die Innenoberfläche zur Anlage der Bereiche mit anwachsendem Federdurchmesser eine radiale Durchbrechung zum Einsetzen der Zugfeder aufweist.

Diese radiale Durchbrechung kann eine freie Weite aufweisen, die etwas geringer ist als der Nenndurchmesser der Zugfeder bzw. der Durchmesser der Zugfeder im Bereich ihrer Einschnürung. Die Abmessungsdifferenz ist dabei so zu wählen, daß die Feder noch durch die radiale Durchbrechung hindurchgedrückt werden kann, aber gleichzeitig innerhalb des Befestigungselements gegen Herausfallen gesichert ist.

Es ist aber auch möglich, eine unbehinderte Einführbarkeit bzw. Entnehmbarkeit der Zugfeder vorzusehen, d. h., die freie Weite der radialen Durchbrechung sogar etwas größer als den Durchmesser der Zugfeder vorzusehen. In diesem Fall ist jedoch eine Einrichtung sinnvoll, die den Verbleib der Zugfeder in dem Befestigungselement sichert.

Dies kann eine das Befestigungselement übergreifende Kappe sein, die mit einem vorstehenden Rand die radiale Durchbrechung verschließt. Eine solche Kappe ist insbesondere dann vorteilhaft, wenn das Befestigungselement zur Befestigung einer Mehrzahl von Zugfedern vorgesehen ist, wobei die einzelnen Innenoberflächen in ringförmiger Anordnung um einen Aufhängepunkt vorgesehen sind. Diese Anordnung wird von der Kappe übergriffen, um die Zugfedern in ihren Auflagern zu sichern. Gleichzeitig deckt die Kappe die Federenden der Zugfedern ab, wodurch Verletzungen durch scharfkantige Enden des Federdrahts der Zugfedern verhindert werden. Nach Entfernen der Kappe sind die Zugfedern in radialer Richtung durch die Durchbrechungen entnehmbar und dadurch austauschbar.

Jede Zugfeder kann an beiden Federenden einen Bereich mit anwachsendem Federdurchmesser aufweisen, wobei sie sich zwischen zwei Befestigungselementen mit kragenförmigen, radiale Durchbrechungen aufweisenden Innenoberflächen erstrecken. Damit wird ein leicht handhabbares Federpaket geschaffen.

Die leichte Handhabbarkeit des Federpakets ist insbesondere dann gegeben, wenn beide Aufhängepunkte des Federpakets von Schrauben ausgebildet werden, die in Gewindebohrungen in den Befestigungselementen eingeschraubt sind, wobei die Gewindebohrungen in den beiden Befestigungselementen mit gegenläufigen Gewinden versehen sind. Bei diesem Aufbau ist das Aufbringen einer Vorspannung auf das Federpaket durch Verdrehen des Federpakets relativ zu den ortsfesten Schrauben in einfachster Weise möglich.

Bei der Erfindung wird nicht das Federinnere zur Verankerung eines Befestigungselements verwandt. Vielmehr dient die Außenoberfläche der Federenden als Widerlager der Zugfeder zur Anlagerung an der entsprechend ausgebildeten Innenoberfläche des Befestigungselements. Hierbei ist es nicht erforderlich, daß die Innenoberfläche des Befestigungselements zwischen die einzelnen Windungen der Zugfeder eingreift. Die notwendige Auflagerfläche wird vielmehr durch die Aufweitung des Federdurchmessers an den Federenden geschaffen. Diese Aufweitung an den Federenden ist ohne großen Aufwand bei der Fertigung der Zugfeder realisierbar. Die neue Zugfeder ist zur Aufnahme sehr großer Kräfte geeignet, die zuverlässig über den Bereich mit anwachsendem Federdurchmesser und das für diesen vorgesehene kragenförmige Auflager an dem Befestigungselement abgetragen werden. Gleichzeitig ergibt sich eine lange Lebensdauer, die derjenigen von Druckfedern vergleichbar ist. Gegenüber einer Zugfeder mit Ösen weist die neue Zugfeder eine größere Konstruktionsfreiheit bei der Anwendung auf, da keine feste Winkelstellung einer Öse berücksichtigt werden muß. Bei entsprechender Ausbildung des Befestigungselements besteht zudem eine absolute Sicherheit bezüglich eines Lösens der Zugfeder aus ihrer Befestigung. Bei einem Bruch der Feder ist weiterhin ein Ausschlagen der Feder in radialer Richtung in konstruktiv einfacher Weise zu verhindern.

Eine ausreichende Abtragung der auf die Feder einwirkenden Kräfte auf das Befestigungselement ist gewährleistet, wenn der Bereich mit anwachsendem Federdurchmesser über mindestens zwei Windungen zur Anlage an dessen kragenförmiger Innenoberfläche vorgesehen ist. Dabei ist keine umlaufende Anlage der beiden Windungen an der Innenoberfläche erforderlich.

Eine konusförmige Innenoberfläche ist dann auf den Bereich mit anwachsendem Federdurchmesser abgestimmt, wenn der Federdurchmesser der Zugfeder in diesem Bereich mit gleicher Steigung linear anwächst. Es sind aber ohne weiteres andere Verläufe des anwachsenden Federdurchmessers denkbar, die ohne Nachteil hinsichtlich der Funktion der Zugfeder zugrundegelegt werden können. Zu denken ist beispielsweise an einen sinusförmig oder exponentiell anwachsenden Federdurchmesser.

Vor dem Bereich mit anwachsendem Federdurchmesser kann der Federdurchmesser der Zugfeder abnehmen, so daß die Einhüllende der Zugfeder eine Einschnürung aufweist. Damit kann die neue Zugfeder derart ausgebildet sein, daß ihr maximaler Durchmesser an den Federenden ihrem Nenndurchmesser entspricht. Hierdurch ergibt sich eine vereinfachte Handhabbarkeit und insbesondere ein kleiner radialer Einbauraum der einzelnen Zugfedern bei Federpaketen.

Der Bereich mit anwachsendem Federdurchmesser ist vorteilhafterweise am äußersten Federende vorgesehen. So weist der aktive Bereich zwischen den Federenden der Zugfeder eine maximale Länge auf, und die Zugfeder beansprucht in Relation zu ihrer Leistungsfähigkeit einen kleinen axialen Einbauraum.

Es versteht sich, daß die lange Lebensdauer der neuen Zugfeder nur dann voll ausgenutzt werden kann, wenn sie an beiden Federenden einen Bereich mit anwachsendem Federdurchmesser zur Ausbildung einer Befestigungseinrichtung aufweist. Wenn demgegenüber an dem anderen Ende eine Öse an die Zugfeder angeformt ist, sind die Vorteile hinsichtlich der Lebensdauer nur zu einem geringen Teil ausschöpfbar.

Die Erfindung wird im folgenden anhand von Ausführungsbeispielen näher erläutert und beschrieben. Es zeigen die
- Figuren 1 bis 3: drei Ausführungsformen der Zugfeder,
- Figur 4: die Ausführungsform der Zugfeder gemäß Figur 1 in Verbindung mit einem erfindungsgemäßen Befestigungselement und
- Figuren 5 bis 8: drei Federpakete aus Zugfedern in der Ausführungsform gemäß Figur 1 bzw. Figur 2 mit entsprechenden Befestigungselementen.

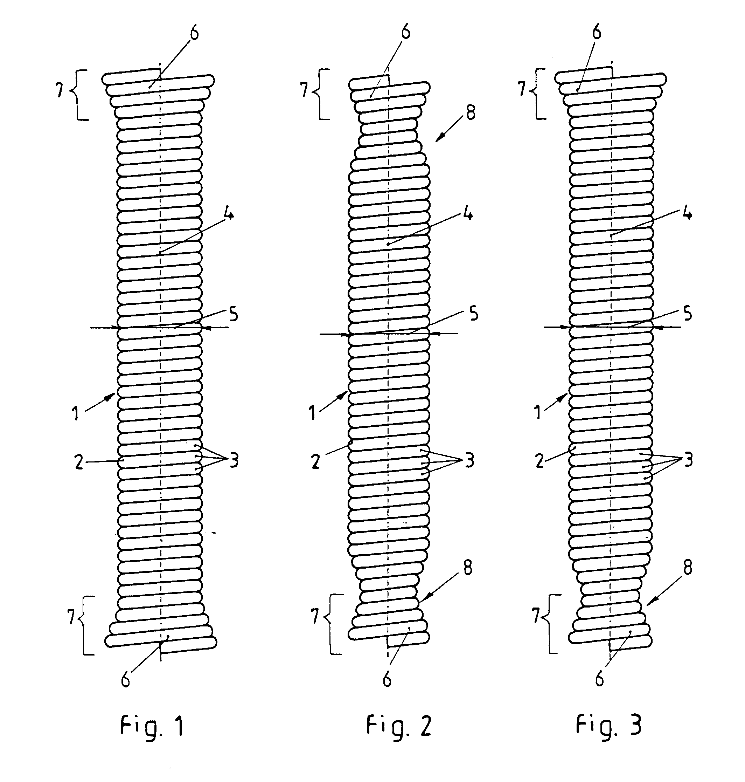

Die in Figur 1 dargestellte Zugfeder 1 weist einen schraubenförmig verformten Federdraht 2 mit kreisförmigem Querschnitt auf. Dabei liegen die einzelnen Federwindungen 3 in unbelastetem Zustand der Zugfeder 1 unter Vorspannung aneinander an. Über ihre wesentliche Länge entlang ihrer Federachse 4 weist die Zugfeder 1 einen konstanten Federdurchmesser 5 auf. An den Federenden 6 befinden sich jedoch Bereiche 7, in denen der Federdurchmesser 5 der Zugfeder 1 anwächst. Die Bereiche 7 dienen zur Befestigung der Zugfeder 1 an ihren Federenden 6. Gemäß Figur 1 ist der Federdurchmesser 5 zwischen den Bereichen 7 konstant und entspricht damit dem Nenndurchmesser der Zugfeder 1.

Anders verhält es sich bei der Zugfeder 1 gemäß Figur 2. Hier nimmt der Federdurchmesser 5 vor den Bereichen 7 mit anwachsendem Federdurchmesser 5 ab, wodurch Einschnürungen 8 ausgebildet sind. Aufgrund der Einschnürungen 8 geht der Federdurchmesser 5 in dem Bereich 7 nicht über den Nenndurchmesser der Zugfeder 1 hinaus.

Bei der Ausführungsform der Zugfeder 1 gemäß Figur 3 sind die Ausführungsformen gemäß Figur 1 und Figur 2 kombiniert, d. h. am oberen Federende 6 ist ein Bereich 7 vorgesehen, in dem der Federdurchmesser 5 über den Nenndurchmesser der Zugfeder 1 anwächst. Der untere Bereich 7 beginnt erst, nachdem der Federdurchmesser 5 unter Ausbildung einer Einschnürung 8 abgenommen hat.

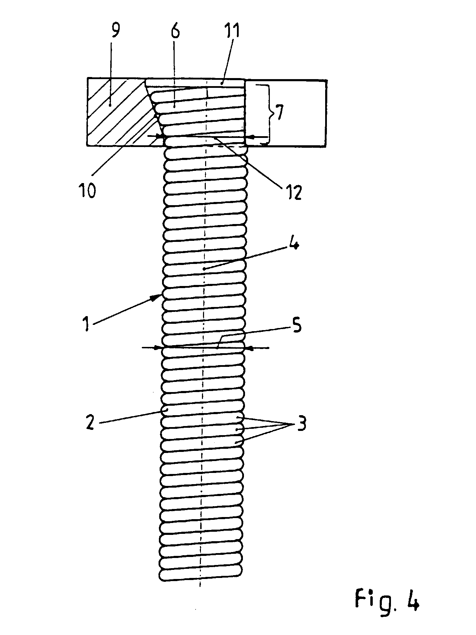

Figur 4 zeigt die Zugfeder 1 gemäß Figur 1 in Verbindung mit einem Befestigungselement 9. Das Befestigungselement 9 ist spiegelsymmetrisch zu einer Ebene ausgebildet, die die Zeichenebene in der Federachse 4 senkrecht schneidet. Die linke Hälfte des Befestigungselements 9 ist geschnitten, die rechte Hälfte in Seitenansicht wiedergegeben. In dem Befestigungselement 9 liegt der Bereich 7 auf einer Innenoberfläche 10 auf. Die Innenoberfläche 10 entspricht dabei der Einhüllenden des Bereichs 7, d. h. einer Fläche, die die radial äußeren Punkte der einzelnen Federwindungen 3 miteinander verbindet. Die Innenoberfläche 10 weist so grundsätzlich eine Kragenform auf. Bei Figur 4 ist sie in Abstimmung auf den in dem Bereich 7 linear anwachsenden Federdurchmesser 5 konisch ausgebildet. Zum Betrachter hin weist die Innenoberfläche 10 eine Durchbrechung 11 auf. Die freie Weite 12 der Durchbrechung 11 ist etwas kleiner als der Nenndurchmesser der Zugfeder 1, so daß die Zugfeder 1 zwar seitlich in das Befestigungselement 9 eindrückbar ist, aber in diesem einen unverlierbaren Sitz findet. Die Zugfeder 1 ist nur unter Aufwendung radialer Kraft wieder aus dem Befestigungselement 9 entfernbar. In axialer Richtung ist das Befestigungselement 9 hingegen entlang der Zugfeder 1 frei verschiebbar. An der Innenoberfläche 10 des Befestigungselements 9 liegen mindestens zwei Federwindungen 3 des Federdrahts 2 an, um eine gleichmäßige Kraftabtragung von der Zugfeder 1 über die Innenoberfläche 10 auf das Befestigungselement 9 sicherzustellen. Die Zugfeder 1 weist bei der Lagerung mit Hilfe des Befestigungselements 9 keinen Punkt auf, an dem eine besondere Bruchgefahr für den Federdraht 2 besteht. So sind Standzeiten erreichbar, die denjenigen von Druckfedern entsprechen.

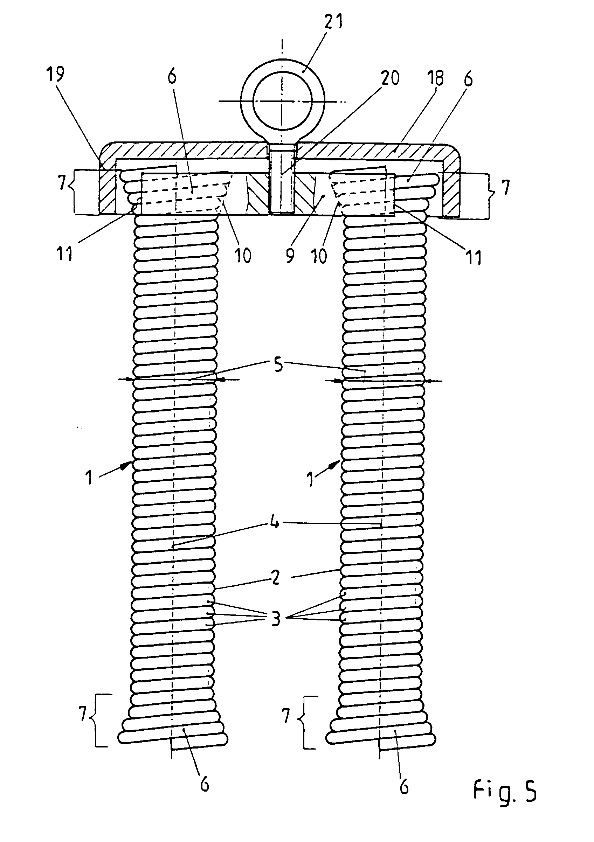

Das Befestigungselement 9 gemäß Figur 5 ist zur Befestigung von zwei Zugfedern 1 vorgesehen. Entsprechend weist es zwei kragenförmige Innenoberflächen 10 auf. Diese wiederum besitzen radiale Durchbrechungen 11, durch die die Zugfedern 1 in das Befestigungselement 9 einbringbar sind. Die freien Weiten dieser Durchbrechungen sind dabei größer als der Nenndurchmesser der Zugfedern 1. Zur Sicherung der Zugfedern 1 in dem Befestigungselement 9 ist eine Kappe 18 vorgesehen, deren vorstehender Rand 19 die Durchbrechungen 11 in radialer Richtung verschließt. Die Kappe 18 ist auf das Befestigungselement 9 mit Hilfe einer Schraube 20 aufgeschraubt, wobei die Schraube 20 an ihrem freien Ende einen Befestigungsring 21 aufweist. Das Befestigungselement 9 gemäß Figur 5 kann für eine Vielzahl von Zugfedern 1 vorgesehen sein, die dann ringförmig um die Schraube 20 angeordnet sind. Bei einem solchen Federpaket können die einzelnen Zugfedern 1 problemlos ausgewechselt werden.

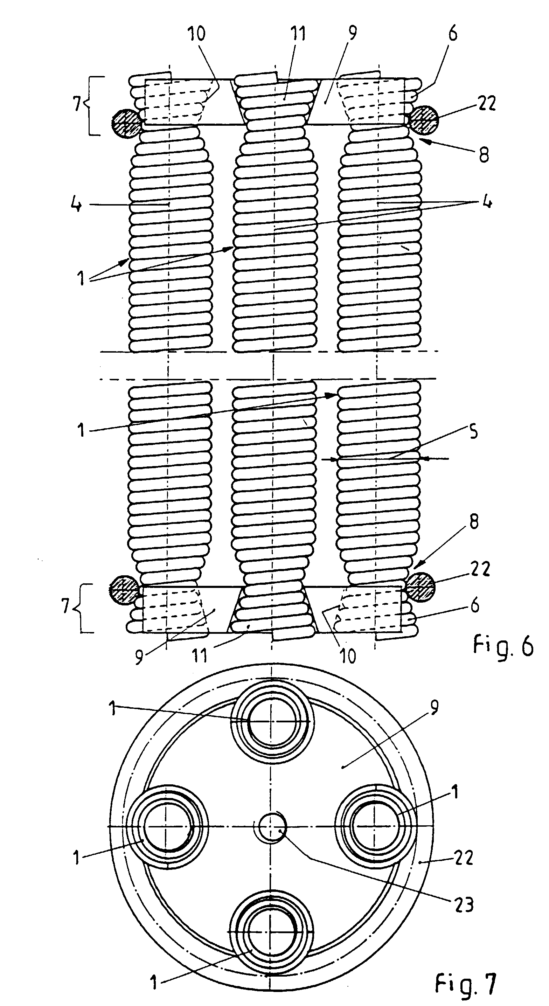

Die Figuren 6 und 7 zeigen ein Paket von vier Zugfedern 1 gemäß Figur 2 in Verbindung mit einer weiteren Ausführungsform des Befestigungselements 9. Dieses Befestigungselement 9 entspricht bis auf die Tatsache, daß es zur Aufnahme von vier Zugfedern 1 vorgesehen ist, der Ausführungsform gemäß Figur 7. Ihm ist jedoch keine Kappe 18, sondern ein Haltering 22 zugeordnet. Der Haltering 22 liegt an den Zugfedern 1 am Grund deren Einschnürungen 8 an. Er stellt so sicher, daß die Zugfedern 1 nicht radial aus dem Befestigungselement 9 herausspringen. Nach Entfernung des Halterings 22 ist ein Austauschen der Zugfedern 1 durch radiale Entnahme möglich. Zur Befestigung des Befestigungselements gemäß den Figur 6 und 7 selbst ist eine Gewindebohrung 23 vorgesehen, in die beispielsweise eine Schraube 20 gemäß Figur 5 einschraubbar ist.

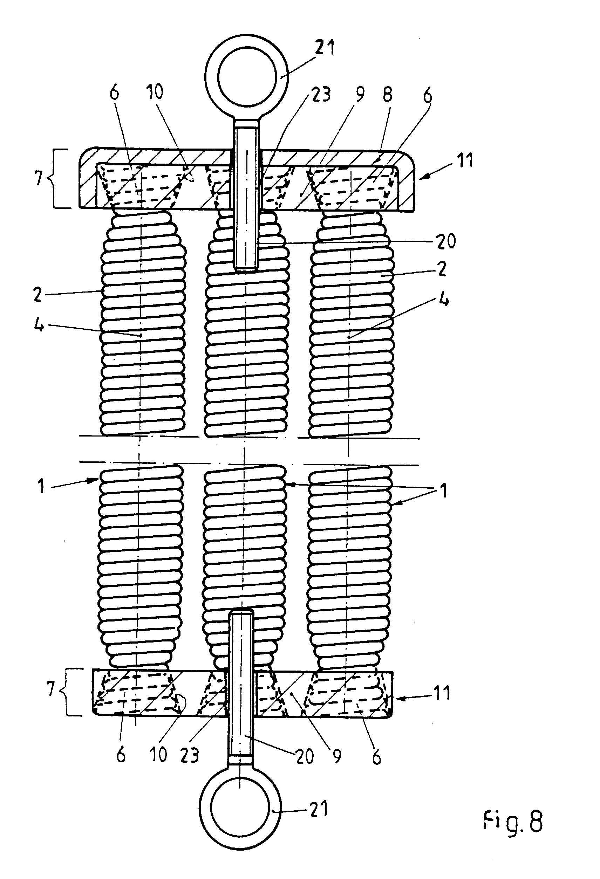

Figur 8 zeigt ein Paket von 6 Zugfedern 1 im Längsschnitt. Dabei sind die drei hinter der Schnittebene angeordneten Zugfedern 1 zu sehen. Die Befestigungselemente 9 an den oberen und unteren Federenden 6 der Zugfedern 1 sind identisch ausgebildet. Es handelt sich um Druckgußteile aus einer zähen Aluminiumlegierung. Die radialen Durchbrechungen 11 in den Befestigungselementen 9 sind derart dimensioniert, daß die Zugfedern 1 im entspannten Zustand ohne größere Mühe radial entnommen werden können. Das Federpaket gemäß Figur 8 ist jedoch dafür vorgesehen, unter permanenter Vorspannung zu stehen. Durch diese Vorspannung werden die Federenden 6 unverrückbar auf den von den Innenoberflächen 10 gebildeten Auflagern fixiert. Zum Aufbringen der Vorspannkraft weisen die Gewindebohrungen 23 in dem oberen und unteren Befestigungselement 9 des Federpakets gegenläufige Steigungsrichtungen auf. Entsprechend sind die Schrauben 20, die in das obere und untere Befestigungselement 9 eingeschraubt sind, mit gegenläufigen Gewinden versehen. Beispielsweise können die Gewindebohrung 23 und die Schraube 20 des oberen Befestigungselements 9 ein Linksgewinde und die Gewindebohrung 23 und die Schraube 20 des unteren Befestigungselements 9 ein Rechtsgewinde aufweisen. Wird jetzt das Federpaket um seine Längsachse relativ zu den ortsfest eingehängten oberen und unteren Befestigungsringen 21 verdreht, so wird eine Vorspannung auf die Zugfedern 1 aufgebracht oder erhöht bzw. gesenkt. Auf diese Weise ist das Aufbringen von Vorspannkraft auf das Federpaket, das Nachspannen des Federpakets oder die Einstellung der Vorspannung des Federpakets auf einfachste Weise ohne Werkzeug möglich. Die leichte Verstellung der Vorspannkraft bei dem Federpaket gemäß Figur 8 beruht auch auf seinem im Vergleich seiner einzelnen Zugfeder relativ großen Durchmesser, wodurch die Hebelverhältnisse zum Verdrehen des Federpakets um seine Längsachse besonders günstig sind. Darüberhinaus ist die von der Mehrzahl der Zugfedern 1 gebildete radiale Oberfläche des Federpakets recht griffig. Die sich damit insgesamt ergebenden Vorteile sind insbesondere bei dem Aufbau von Garagentoren nutzbar. Garagentore werden üblicherweise durch zwei beiderseits des Garagentors angeordnete starke Zugfedern gehalten. Eine Verstellung der Vorspannung dieser Zugfedern ist normalerweise nur mit großem Aufwand möglich. Diese einzelnen Zugfedern können durch das Federpaket gemäß Figur 8 ersetzt werden. Die leichte Verstellbarkeit der Vorspannung des Federpakets ist dann beispielsweise nutzbar, wenn ein Garagentor-Bausatz mit unterschiedlichen Beplankungen für das Tor versehen wird, die unterschiedliche Vorspannungen der Haltefeder erfordern. Unterschiede in dem Gewicht der Beplankung, die sinnvollerweise ausgeglichen werden, ergeben sich aber auch bereits durch eine unterschiedliche Feuchtigkeitsaufnahme der Beplankung in den verschiedenen Jahreszeiten. Bislang werden diese Unterschiede nur in den seltensten Fällen ausgeglichen, da einem Laien eine Veränderung der Vorspannkraft einer herkömmlichen Haltefeder eines Garagentors unmöglich ist. Weitere Vorteile des neuen Federpakets bei der Verwendung als Haltefeder für ein Garagentor ergeben sich dadurch, daß bei dem Bruch einer einzelnen Zugfeder 1 nur ein begrenzter Kraftabfall gegeben ist. So ist es problemlos möglich, 150 Newton als Obergrenze für die an dem Garagentor durch den Bruch einer einzelnen Zugfeder 1 frei werdende Kraft einzuhalten. Darüberhinaus weisen die Zugfedern 1 des neuen Federpakets im Vergleich zu üblichen Haltefedern für Garagentore eine geringe Dicke des Federdrahts und eine sehr große Anzahl von Federwindungen auf. Hierdurch ergeben sich sehr kleine Abstände zwischen den Federwindungen auch im voll gespannten Zustand des Federpakets. Daher ist es ohne weiteres möglich, einen Maximalabstand der Federwindungen von unter vier Millimetern einzuhalten, so daß kein zusätzlicher Fingerschutz für das Federpaket erforderlich ist, der ein Eingreifen zwischen die einzelnen Federwindungen der gespannten Zugfedern verhindert. Die Kappe 18 ist bei dem Federpaket gemäß Figur 8 nur über dem oberen Befestigungselement 9 vorgesehen. Sie deckt die oberen Federenden 6 der Zugfedern 1 ab. Auf diese Weise wird ein Eindringen von Verunreinigungen in die Zugfedern von oben verhindert. Weiterhin werden Verletzungen durch die freien Enden des Federdrahts 2 ausgeschlossen. Die Kappe 18 besteht vorzugsweise aus einem zäh-elastischen und bruchunempfindlichen PE-Material. Für das untere Befestigungselement 9 ist eine solche Kappe 18 als Abdeckung nicht erforderlich. Bei der Verwendung des Federpakets gemäß Figur 8 als Haltefeder für ein Garagentor bestünde vielmehr die Gefahr, daß sich in einer unten angebrachten Kappe Schmutz ansammelt.

### BEZUGSZEICHENLISTE

- 1 -: Zugfeder
- 2 -: Federdraht
- 3 -: Federwindungen
- 4 -: Federachse
- 5 -: Federdurchmesser
- 6 -: Federende
- 7 -: Bereich
- 8 -: Einschnürung
- 9 -: Befestigungselement
- 10 -: Innenoberfläche
- 11 -: Durchbrechung
- 12 -: Weite
- 18 -: Kappe
- 19 -: Rand
- 20 -: Schraube
- 21 -: Befestigungsring
- 22 -: Haltering
- 23 -: Gewindebohrung

## Patentansprüche

1. Federanordnung mit mindestens einer schraubenförmigen Zugfeder, die an mindestens einem Federende (6) einen Bereich (7) mit längs ihrer Federachse (4) stetig anwachsendem Federdurchmesser (5) aufweist, wobei der Bereich (7) zur Anlage an einer kragenförmigen Innenoberfläche (10) eines Befestigungselements (9) vorgesehen ist, **dadurch gekennzeichnet,** daß die Innenoberfläche (10) zur Anlage des Bereichs (7) mit anwachsendem Federdurchmesser (5) eine radiale Durchbrechung (11) zum Einsetzen der Zugfeder (1) aufweist.

2. Federanordnung nach Anspruch 1, **dadurch gekennzeichnet,** daß das Befestigungselement (9) zur Befestigung einer Mehrzahl von parallel zueinander angeordneten Zugfedern (1) vorgesehen ist, wobei jede Innenoberfläche (10) zur Anlage eines Bereichs (7) mit anwachsendem Federdurchmesser (5) eine radiale Durchbrechung (11) zum Einsetzen der jeweiligen Zugfeder (1) aufweist.

3. Federanordnung nach Anspruch 2, **dadurch gekennzeichnet,** daß eine Kappe (18) vorgesehen ist, die die Federenden (6) der Zugfedern (1) abdeckt und deren vorstehender Rand (19) die Durchbrechungen (11) in radialer Richtung verschließt.

4. Federanordnung nach Anspruch 2 oder 3, **dadurch gekennzeichnet,** daß die Zugfedern (1) ringförmig um einen Aufhängepunkt des Befestigungselements (9) angeordnet sind.

5. Federanordnung nach Anspruch 4, **dadurch gekennzeichnet,** daß der Aufhängepunkt von einer Schraube (20) ausgebildet wird, die in eine Gewindebohrung (23) in dem Befestigungselement (9) eingeschraubt ist.

6. Federanordnung nach einem der Ansprüche 1 bis 5, **dadurch gekennzeichnet,** daß jede Zugfeder (1) an beiden Federenden (6) einen Bereich (7) mit anwachsendem Federdurchmesser (5) aufweist und daß zwei Befestigungselemente (9) mit kragenförmigen Innenoberflächen vorgesehen sind, die radiale Durchbrechungen (11) aufweisen.

7. Federanordnung nach Anspruch 5 und 6, **dadurch gekennzeichnet,** daß die Gewindebohrungen (23) in den beiden Befestigungselementen mit gegenläufigen Gewinden versehen sind.

8. Federanordnung nach einem der Ansprüche 1 bis 7, **dadurch gekennzeichnet,** daß jeder Bereich (7) mit anwachsendem Federdurchmesser (5) über mindestens zwei Windungen (3) zur Anlage an der jeweiligen Innenoberfläche (10) des Befestigungselements (9) vorgesehen ist.

9. Federanordnung nach einem der Ansprüche 1 bis 8, **dadurch gekennzeichnet,** daß der in jedem Bereich (7) mit anwachsendem Federdurchmesser (5) der Federdurchmesser (5) linear anwächst.

10. Federanordnung nach einem der Ansprüche 1 bis 9, **dadurch gekennzeichnet,** daß der Federdurchmesser (5) vor jedem Bereich (7) mit anwachsendem Federdurchmesser (5) abnimmt.

## Claims

1. Spring arrangement with at least one helical tension spring having, at least at one spring end (6), a portion (7) with a continuously increasing spring diameter (5), the portion (7) being provided for bearing against a collar shaped inner surface (10) of a fixture element (9), **characterized in** that the inner surface (10) for bearing the portion (7) with increasing spring diameter (5) has a radial opening (11) for inserting the tension spring (1).

2. Spring arrangement according to claim 1, **characterized in** that the fixture element (9) is provided for the fixture of a plurality of tension springs (1) arranged in parallel, each inner surface (10) for bearing a portion (7) with increasing spring diameter (5) having a radial opening (11) for inserting the respective tension spring (1).

3. Spring arrangement according to claim 2, **characterized in** that a cap (18) is provided, which covers the spring ends (6) of the tension springs (1) and the projecting edge (19) of which closes the openings (11) in radial direction.

4. Spring arrangement according to claim 2 or 3, **characterized in** that the tension springs (1) are arranged ring like around a suspension point of the fixture element (9).

5. Spring arrangement according to claim 4, **characterized in** that the suspension point is formed by a screw (20), which is screwed in a threaded hole (23) in the fixture element (9).

6. Spring arrangement according to any of the claims 1 to 5, **characterized in** that each tension spring (1) has a portion (6) with increasing spring diameter (5) at both spring ends (6), and that two fixture elements (9) with collar shaped inner surfaces are provided, which have radial openings (11).

7. Spring arrangement according to claim 5 and 6, **characterized in** that the threaded holes (23) in the two fixture elements are provided with threads of opposite directions.

8. Spring arrangement according to any of the claims 1 to 7, **characterized in** that each portion (7) with increasing spring diameter (5) is provided for bearing against the respective inner surface (10) of the fixture element (9) over at leat two windings (3).

9. Spring arrangement according to any of the claims 1 to 8, **characterized in** that in each portion (7) with increasing spring diameter (5) the spring diameter (5) increases linearly.

10. Spring arrangement according to any of the claims 1 to 9, **characterized in** that the spring diameter (5) decreases in front of each portion (7) with increasing spring diameter (5).

## Revendications

1. Dispositif à ressort avec au moins un ressort de traction hélicoïdal, qui présente, à au moins une extrémité de ressort (6), une zone (7) avec diamètre de ressort (5) croissant en permanence le long de tout son axe de ressort (4), la zone (7) étant prévue pour l'application contre une surface intérieure (10) en forme de collet d'un élément de fixation (9), caractérisé en ce que la surface intérieure (10) présente, pour l'application de la zone (7) de diamètre de ressort (5) croissant, un ajour (11) radial, pour l'introduction du ressort de traction (1).

2. Dispositif à ressort selon la revendication 1, caractérisé en ce que l'élément de fixation (9) est prévu pour la fixation d'une pluralité de ressorts de traction (1), disposés parallèllement entre eux, chaque surface intérieure (10) présentant un ajour (11) radial du ressort de traction (1) respectif, pour l'application d'une zone (7) de diamètre de ressort (5) croissant.

3. Dispositif à ressort selon la revendication 2, caractérisé en ce qu'il est prévu un capuchon (18), qui recouvre les extrémités (6) des ressorts de traction (1) et dont le bord (19) saillant ferme les ajours (1) dans la direction radiale.

4. Dispositif à ressort selon la revendication 2 ou 3, caractérisé en ce que les ressorts de traction (1) sont disposés en anneau autour d'un point de suspension de l'élément de fixation (9).

5. Dispositif à ressort selon la revendication 4, caractérisé en ce que le point de suspension est formé par une vis (20), qui est vissée dans un trou taraudé (23), dans l'élément de fixation (9).

6. Dispositif à ressort selon l'une des revendications 1 à 5, caractérisé en ce que chaque ressort de traction (1) présente, à ses deux extrémités (6), une zone (7) de diamètre de ressort (5) croissant et en ce que sont prévus deux éléments de fixation (9) avec des surfaces intérieures en forme de collet, qui présentent des ajours (11) radiaux.

7. Dispositif à ressort selon les revendications 5 et 6, caractérisé en ce que les trous taraudés (23) sont pourvus de filetages en sens contraire, dans les deux éléments de fixation.

8. Dispositif à ressort selon l'une des revendications 1 à 7, caractérisé en ce que chaque zone (7) de diamètre de ressort (5) croissant, est prévue sur au moins deux spires (3), en vue de l'application contre la surface intérieure (10) respective de l'élément de fixation (9).

9. Dispositif à ressort selon l'une des revendications 1 à 8, caractérisé en ce que dans chaque zone (7) de diamètre de ressort (5) croissant, le diamètre de ressort (5) croît linéairement.

10. Dispositif à ressort selon l'une des revendications 1 à 9, caractérisé en ce que le diamètre de ressort (5) diminue devant chaque zone (7) de diamètre de ressort (5) croissant.
